(19)

**Europäisches Patentamt**
**European Patent Office**
**Office européen des brevets**

(11) **EP 4 745 839 A1**

(12) **EUROPEAN PATENT APPLICATION**

(43) Date of publication:
20.05.2026  Bulletin 2026/21

(21) Application number: 25209125.1

(22) Date of filing: 16.10.2025

(51) International Patent Classification (IPC):
*G06N 3/0442* (2023.01)    *G06N 3/0455* (2023.01)
*G06N 3/08* (2023.01)    *H04L 47/70* (2022.01)
*H04L 47/83* (2022.01)    *H04W 72/04* (2023.01)

(52) Cooperative Patent Classification (CPC):
G06N 3/0455; G06N 3/0442; G06N 3/08;
H04L 47/70; H04L 47/83; H04W 72/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  15.11.2024  GB 202416804

(71) Applicant: **Nokia Solutions and Networks Oy
02610 Espoo (FI)**

(72) Inventors:
• **DEISS, Thomas
  Herne (DE)**
• **BAG, Tanmoy
  Neu-Ulm (DE)**

(74) Representative: **Nokia EPO representatives
Nokia Technologies Oy
Karakaari 7
02610 Espoo (FI)**

(54) **APPARATUS AND METHOD FOR A WIRELESS COMMUNICATION SYSTEM**

(57)    An apparatus for a wireless communication system, the apparatus comprising means for determining, based on historic multi-dimensional resource allocation information of a network device for the wireless communication system, a condensed one-dimensional representation of the historic multi-dimensional resource allocation information using a first model, determining predicted condensed one-dimensional resource allocation information based on the condensed one-dimensional representation of the historic multi-dimensional resource allocation information using a second model, which is different from the first model, expanding the predicted condensed one-dimensional resource allocation information using the first model to obtain predicted multi-dimensional resource allocation information for the network device.

EP 4 745 839 A1

**Description**

**Field of the Disclosure**

Various example embodiments relate to an apparatus for a wireless communication system.

Further example embodiments relate to a method for a wireless communication system.

**Background**

Wireless communication systems may comprise several devices, such as base stations and/or terminal devices, configured to exchange information via wireless data transmission.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a wireless communication system, the apparatus comprising at least one processor, and at least one memory storing instructions that, when executed by the at least one processor, cause the apparatus to: determine, based on historic multi-dimensional resource allocation information of a network device for the wireless communication system, a condensed one-dimensional representation of the historic multi-dimensional resource allocation information using a first model, determine predicted condensed one-dimensional resource allocation information based on the condensed one-dimensional representation of the historic multi-dimensional resource allocation information using a second model, which is different from the first model, expand the predicted condensed one-dimensional resource allocation information using the first model to obtain predicted multi-dimensional resource allocation information, e.g., for the network device. In some examples, this enables to provide information associated with a future resource allocation, e.g., of at least one network device for the wireless communication system.

In some examples, at least one of the wireless communication system or the network device for the wireless communication system may adhere to and/or may be based on some accepted (and/or planned) standard, such as, e.g. 3G, 4G, 5G, 6G, or some other wireless communication standard.

In some examples, the first model is an autoencoder, wherein determining the condensed one-dimensional representation of the historic multi-dimensional resource allocation information comprises encoding the historic multi-dimensional resource allocation information using an encoder of the autoencoder, wherein expanding the predicted condensed one-dimensional resource allocation information comprises decoding the predicted condensed one-dimensional resource allocation information using a decoder of the autoencoder.

In some examples, the encoder is configured to compress comparatively high-dimensional input data into a lower-dimensional latent space representation, e.g., capturing essential features of the input while discarding non-critical information. In other words, the latent space, or compressed feature representation, enables dimensionality reduction, which may, e.g., reveal underlying data patterns or simplify data processing.

In some examples, the decoder is configured to reconstruct the input data from this latent representation, e.g., aiming to approximate the original input as closely as possible. In some examples, this encoding-decoding process may be trained by minimizing the reconstruction error between the input and the output, e.g., ensuring that the autoencoder learns an effective mapping of the data into the latent space and back.

In some examples, the autoencoder may be a deep autoencoder. In some examples, the deep autoencoder may comprise one or more hidden layers in at least one of the encoder or the decoder. In some examples, these hidden layers may enable the deep autoencoder model to learn comparatively complex, e.g., hierarchical, feature representations of the input data. In some examples, the encoder of a deep autoencoder may, e.g., progressively reduce a dimensionality across each layer, e.g., until reaching a comparatively compact latent space, while the decoder may, e.g., mirror this process in reverse, e.g., to reconstruct the data.

In some examples, the second model is configured to perform a multivariate time-series prediction based on the condensed one-dimensional representation to obtain the predicted condensed one-dimensional resource allocation information.

In some examples, the second model comprises at least one of: a) a model for Vector Autoregression, VAR, or b) an Encoder-Decoder LSTM, long short-term memory, model, or c) a Transformer based model.

In some examples, the historic multi-dimensional resource allocation information comprises historic time-frequency resource allocation information, e.g., representing historic two-dimensional resource allocation information.

In some examples, the instructions, when executed by the at least one processor, cause the apparatus to: flatten the historic multi-dimensional resource allocation information to obtain one-dimensional input information for the first model, provide the one-dimensional input information to an input layer of the encoder.

In some examples, flattening the historic multi-dimensional resource allocation information comprises concatenating one of rows or columns of the historic multi-dimensional resource allocation information.

In some examples, the instructions, when executed by the at least one processor, cause the apparatus to: train at least one of the first model or the second model, optionally retrain at least one of the first model or the second model, and use the first model and the second model to predict a future resource allocation for the network device. In some examples, the knowledge of the future resource allocation may be used, e.g., for performing a resource request.

Some examples relate to an apparatus for a wireless communication system, the apparatus comprising means for determining, based on historic multi-dimensional resource allocation information of a network device for the wireless communication system, a condensed one-dimensional representation of the historic multi-dimensional resource allocation information using a first model, determining predicted condensed one-dimensional resource allocation information based on the condensed one-dimensional representation of the historic multi-dimensional resource allocation information using a second model, which is different from the first model, expanding the predicted condensed one-dimensional resource allocation information using the first model to obtain predicted multi-dimensional resource allocation information for the network device.

In some examples, the means may, e.g., comprise at least one processor, and at least one memory storing instructions that, when executed by the at least one processor, cause the apparatus to perform the aforementioned aspects of determining and expanding.

In some examples, the means may, e.g., comprise circuitry configured to perform the aforementioned aspects of determining and expanding.

Some examples relate to a method for a wireless communication system, comprising: determining, based on historic multi-dimensional resource allocation information of a network device for the wireless communication system, a condensed one-dimensional representation of the historic multi-dimensional resource allocation information using a first model, determining predicted condensed one-dimensional resource allocation information based on the condensed one-dimensional representation of the historic multi-dimensional resource allocation information using a second model, which is different from the first model, expanding the predicted condensed one-dimensional resource allocation information using the first model to obtain predicted multi-dimensional resource allocation information for the network device.

Some examples relate to a network device for a wireless communication system, comprising at least one apparatus according to the disclosure.

In some examples, the network device is a distributed unit, e.g., according to a central unit, CU, / distributed unit, DU, split architecture of a base station, e.g., gNB.

In some examples, the distributed unit, DU, is configured to predict at least one future resource allocation request of a further distributed unit, DU, e.g., an opponent DU. As an example, both the distributed unit and the further (e.g., opponent) distributed unit may form part of a gNB CU/DU split architecture, wherein, for example, the different DUs are associated with respective different vendors. In some examples, the principle according to the disclosure may, e.g., be used for Multi-RAT (Radio Access Technology) Spectrum Sharing, MRSS, e.g., Multi-Vendor MRSS, e.g., MV-MRSS. In some examples, a first DU may adapt its resource request(s) to the resource usage of at least one further, e.g., opponent, DU using the knowledge of the future resource allocation related to the at least one further, e.g., opponent, DU.

Some examples relate to a wireless communication system comprising at least one apparatus according to the disclosure.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A     shows a simplified block diagram according to some examples,

Fig. 1B     shows a simplified block diagram according to some examples,

Fig. 2     shows a simplified block diagram according to some examples,

Fig. 3     shows a simplified flow chart according to some examples,

Fig. 4    shows a simplified flow chart according to some examples,

Fig. 5    shows a simplified flow chart according to some examples,

Fig. 6    shows a simplified flow chart according to some examples,

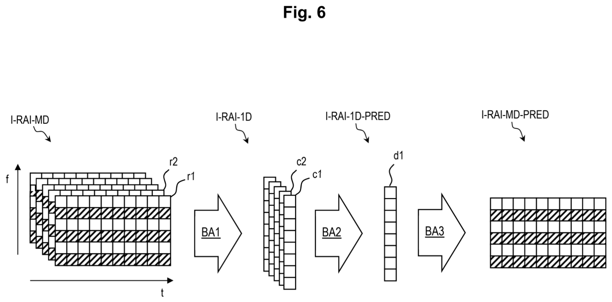

Fig. 6    shows a simplified flow chart according to some examples,

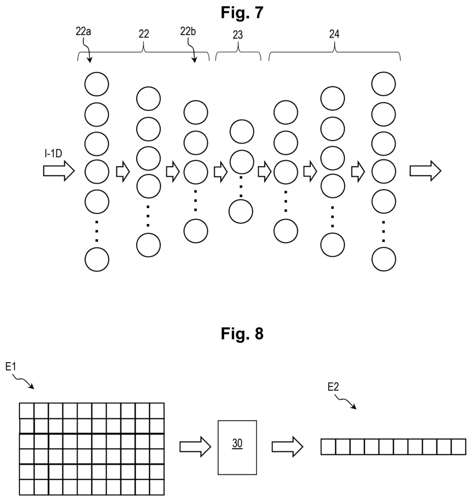

Fig. 7    shows a simplified diagram according to some examples,

Fig. 8    shows a simplified block diagram according to some examples,

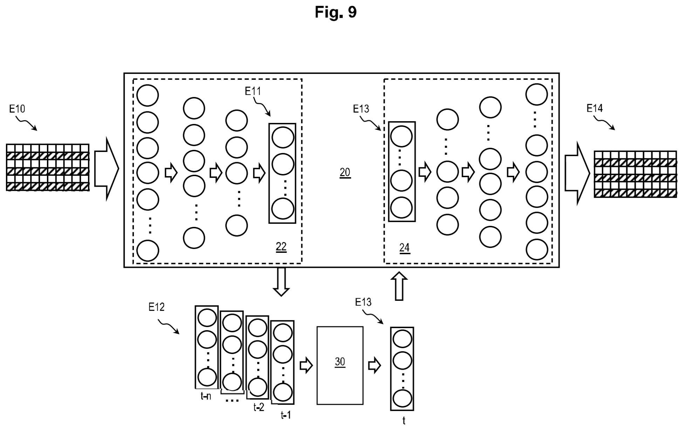

Fig. 9    shows a simplified flow chart according to some examples,

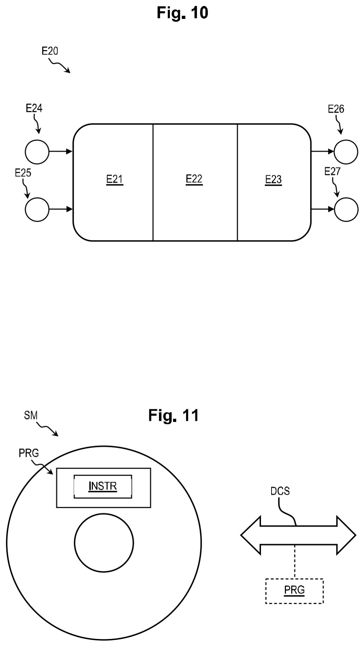

Fig. 10   shows a simplified block diagram according to some examples,

Fig. 11   shows a simplified block diagram according to some examples.

**Description of some Example Embodiments**

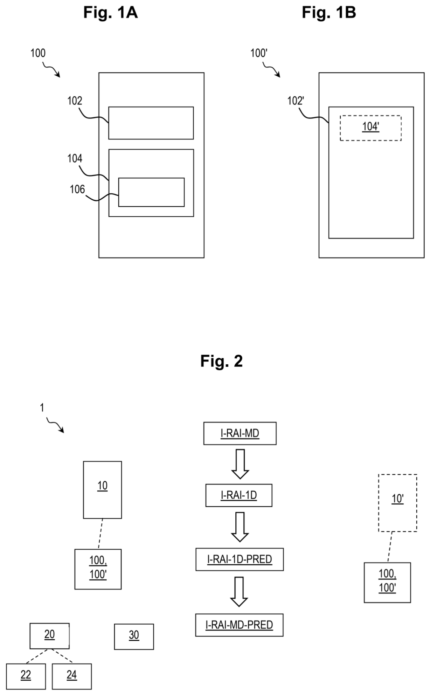

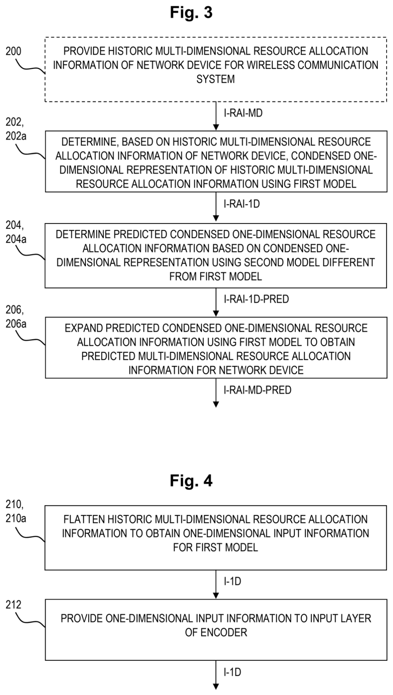

Some examples, see, for example, Fig. 1A, 2, 3, relate to an apparatus 100 (Fig. 1A) for a wireless communication system 1 (Fig. 2), the apparatus 100 comprising at least one processor 102, and at least one memory 104 storing instructions 106 that, when executed by the at least one processor 102, cause the apparatus 100 to: determine 200 (Fig. 3), based on historic multi-dimensional resource allocation information I-RAI-MD of a network device 10, 10' for the wireless communication system 1, a condensed one-dimensional representation I-RAI-1D of the historic multi-dimensional resource allocation information I-RAI-MD using a first model 20, determine 204 predicted condensed one-dimensional resource allocation information I-RAI-1D-PRED based on the condensed one-dimensional representation of the historic multi-dimensional resource allocation information using a second model 30, which is different from the first model 20, expand 206 the predicted condensed one-dimensional resource allocation information I-RAI-1D-PRED using the first model 20 to obtain predicted multi-dimensional resource allocation information I-RAI-MD-PRED, e.g., for the network device 10, 10'. In some examples, this enables to provide information associated with a future resource allocation, e.g., of at least one network device 10, 10' for the wireless communication system 1.

In some examples, Fig. 2, at least one of the wireless communication system 1 or the network device 10, 10' for the wireless communication system may adhere to and/or may be based on some accepted (and/or planned) standard, such as, e.g. 3G, 4G, 5G, 6G, or some other wireless communication standard.

In some examples, Fig. 2, at least one of the first model 20 or the second model 30 may be based on artificial intelligence, AI, e.g., machine learning, ML.

In some examples, Fig. 2, the first model 20 is an autoencoder, wherein determining 202 (Fig. 3) the condensed one-dimensional representation of the historic multi-dimensional resource allocation information comprises encoding 202a the historic multi-dimensional resource allocation information I-RAI-MD using an encoder 22 (Fig. 2) of the autoencoder 20, wherein expanding 206 the predicted condensed one-dimensional resource allocation information comprises decoding 206a the predicted condensed one-dimensional resource allocation information using a decoder 24 of the autoencoder 20.

In some examples, Fig. 2, the encoder 22 is configured to compress comparatively high-dimensional input data (or, for example, one-dimensional input data I-RAI-1D comprising a comparatively large number of elements, e.g., a comparatively large vector) into a lower-dimensional latent space representation (e.g., a vector comprising a comparatively small number of elements), e.g., capturing essential features of the input data I-RAI-1D while, e.g., discarding non-critical information.

In some examples, the decoder 24 is configured to reconstruct the input data from the latent space representation, e.g., aiming to approximate an original input I-RAI-1D as closely as possible. In some examples, this encoding-decoding process may be trained by minimizing a reconstruction error between the input and the output of the autoencoder 20, e.g., ensuring that the autoencoder learns an effective mapping of the input data into the latent space and back.

In some examples, Fig. 2, the autoencoder 20 may be a deep autoencoder. In some examples, the deep autoencoder 20 may comprise one or more hidden layers (not shown in Fig. 2) in at least one of the encoder 22 or the decoder 24. In some examples, these hidden layers may enable the deep autoencoder model to learn comparatively complex, e.g., hierarchical, feature representations of the input data. In some examples, the encoder of a deep autoencoder may, e.g., progressively reduce a dimensionality across each layer, e.g., until reaching a comparatively compact latent space, while the decoder may, e.g., mirror this process in reverse, e.g., to reconstruct the data. Further details regarding an example structure of the deep autoencoder 20 are provided below with reference, to Fig. 7.

In some examples, Fig. 2, the second model 30 is configured to perform a multivariate time-series prediction based on the condensed one-dimensional representation I-RAI-1D to obtain the predicted condensed one-dimensional resource allocation information I-RAI-1D-PRED.

In some examples, Fig. 2, the second model 30 comprises at least one of: a) a model for Vector Autoregression, VAR, or b) an Encoder-Decoder LSTM, long short-term memory, model, or c) a Transformer based model.

The optional block 200 of Fig. 3 symbolizes providing the historic multi-dimensional resource allocation information, e.g., of at least one of the network devices 10, 10' (Fig. 2).

In some examples, Fig. 2, the historic multi-dimensional resource allocation information comprises historic time-frequency resource allocation information, e.g., historic two-dimensional resource allocation information relating to time and frequency resources, e.g., in the form of a respective time/frequency resource grid.

In some examples, Fig. 4, the instructions 106, when executed by the at least one processor 102, cause the apparatus 100 to: flatten 210 the historic multi-dimensional resource allocation information I-RAI-MD to obtain one-dimensional input information I-1D for the first model 20, provide 212 the one-dimensional input information I-1D to an input layer 22a (see Fig. 7) of the encoder 22.

In some examples, Fig. 4, flattening 210 the historic multi-dimensional resource allocation information comprises concatenating 210a one of rows or columns of the historic multi-dimensional resource allocation information.

In some examples comprising the flattening 210, 210a, the aspects of expanding 206, 206a may, e.g., comprise reverting the flattening, e.g., transforming one-dimensional information as obtained by an output layer of the decoder 24 to the predicted multi-dimensional resource allocation information I-RAI-MD-PRED.

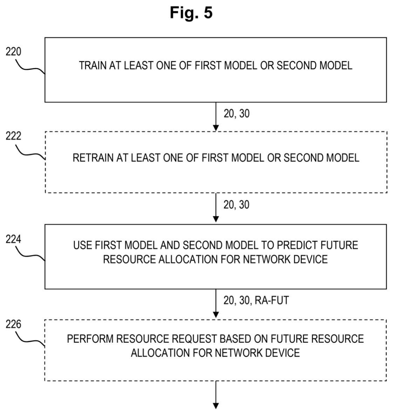

In some examples, Fig. 5, the instructions 106, when executed by the at least one processor 102, cause the apparatus 100 to: train 220 at least one of the first model 20 or the second model 30, optionally retrain 222 at least one of the first model 20 or the second model 30, and use 224 the first model 20 and the second model 30 to predict a future resource allocation RA-FUT for the network device 10, 10'.

In some examples, the knowledge of the future resource allocation RA-FUT may be used, e.g., for performing a resource request. As an example, the first network device 10 (Fig. 2) or the apparatus 100, respectively, may perform aspects of the method according to the disclosure to predict a future resource allocation of the further network device 10'. In some examples, based on the predicted future resource allocation of the further network device 10', the first network device 10 may control at least one aspect of its operation, such as, but not limited to, e.g., resource planning or requesting resources, see, for example, the optional block 226 of Fig. 5.

In some examples, the further network device 10' may also perform at least one aspect of the method according to the disclosure.

Some examples, Fig. 1B, relate to an apparatus 100' for a network device 10, 10' for a wireless communication system 1, the apparatus 100' comprising means 102' for determining 202, based on historic multi-dimensional resource allocation information of a network device for the wireless communication system, a condensed one-dimensional representation of the historic multi-dimensional resource allocation information using a first model, determining 204 predicted condensed one-dimensional resource allocation information based on the condensed one-dimensional representation of the historic multi-dimensional resource allocation information using a second model, which is different from the first model, expanding 206 the predicted condensed one-dimensional resource allocation information using the first model to obtain predicted multi-dimensional resource allocation information for the network device.

In some examples, Fig. 1B, the means 102' may, e.g., comprise at least one processor 102 (see, for example, Fig. 1A), and at least one memory 104 storing instructions 106 that, when executed by the at least one processor 102, cause the apparatus 100' to perform the aforementioned aspects of determining 202, 204 and expanding 206.

In some examples, Fig. 1B, the means 102' may, e.g., comprise circuitry 104' configured to perform the aforementioned aspects of determining 202, 204 and expanding 206.

Some examples, Fig. 3, relate to a method for a wireless communication system 1 (Fig. 2), comprising: determining 202, based on historic multi-dimensional resource allocation information of a network device for the wireless communication system, a condensed one-dimensional representation of the historic multi-dimensional resource allocation information using a first model, determining 204 predicted condensed one-dimensional resource allocation information based on the condensed one-dimensional representation of the historic multi-dimensional resource allocation information using a second model, which is different from the first model, expanding 206 the predicted condensed one-dimensional resource allocation information using the first model to obtain predicted multi-dimensional resource allocation information for the network device.

Some examples, Fig. 2, relate to a network device 10, 10' for a wireless communication system 1, comprising at least one apparatus 100, 100' according to the disclosure. In some examples, the apparatus 100 and/or the apparatus 100' (or their functionality, respectively) may, e.g., be integrated (not shown) into at least one of the network devices 10, 10'. In some other examples, the apparatus 100 and/or the apparatus 100' may be provided for at least one of the network devices 10, 10', but may not necessarily be integrated into the at least one of the network devices 10, 10'.

In some examples, Fig. 2, the network device 10, 10' is a distributed unit, e.g., according to a central unit, CU, / distributed unit, DU, split architecture of a base station, e.g., gNB.

In some examples, the first network device 10, may, e.g., be a target DU, and in some examples, the further network device 10' may, e.g., be an opponent DU.

In some examples, the target DU 10 may be configured to predict at least one future resource allocation request of the opponent DU 10'. As an example, Fig. 2, both DUs 10, 10' may form part of a gNB CU/DU split architecture, wherein, for example, the different DUs 10, 10' are associated with respective different vendors. In some examples, the principle according to the disclosure may, e.g., be used for Multi-RAT (Radio Access Technology) Spectrum Sharing, MRSS, e.g., Multi-Vendor MRSS, e.g., MV-MRSS. In some examples, the first DU 10 may, e.g., adapt its resource request(s) to the resource usage of at least one further DU, e.g., the opponent DU, 10', e.g., using the knowledge of the future resource allocation related to the at least one further, e.g., opponent, DU 10'.

Some examples, Fig. 2, relate to a wireless communication system 1 comprising at least one apparatus 100, 100' according to the disclosure.

In the following, further aspects and examples are provided, which, in some examples, may, e.g., be combined with at least one of the aspects or examples explained above.

In some examples, Fig. 2, the principle according to the disclosure may, e.g., be used to predict, by the first distributed unit, DU, 10, a radio resource allocation of a further, e.g., opponent, DU 10' and, e.g., its load (e.g., implicitly), e.g., before initiating an own resource coordination request, e.g., to maximize an overall spectrum utilization and/or to increase an allocated share of radio resources requested by the first DU 10 itself. In some examples, the latter point may, e.g., increase a predictability of the allocated resources.

In some examples, a radio resource grid usable by the DUs 10, 10' may be comparatively large, so that compressing the resource grid into a lower dimensional 1-D vector using the first model 20 and then applying model-based multivariate time-series forecasting, using the second model 30, may enable an efficient prediction. In some examples, e.g., once a prediction for a compressed vector of expected radio resource allocation pattern of the opponent DU 10' (Fig. 2) is generated, the vector can be decoded again, e.g., to learn the predicted resource allocation request in a two-dimensional, e.g., time and frequency, -based resource scheme.

In some examples, Fig. 2, an objective of the first DU or target DU 10 is to predict a resource allocation request of another DU 10', e.g., the opponent DU, e.g., for a current allocation/coordination period, e.g., based on its historical allocation pattern and load. Based on this information, the target DU 10 may, e.g., create its own resource request, e.g., such that the probability of getting the requested resources allocated increases and it can create a resource request with lower cost in terms of tokens. In some examples, this may allow the target DU 10 to either request more resources or save tokens for future periods with higher demand.

Fig. 6 schematically depicts a flow-chart according to some examples. Element I-RAI-MD denotes historical multidimensional resource allocation information of the opponent DU 10' (Fig. 2), wherein a first set r1 of multidimensional resource allocation information is, e.g., associated with a first point in time t-1, wherein a second set r2 of the multidimensional resource allocation information is, e.g., associated with a second point in time t-2, and so on. In other words, Fig. 6 schematically depicts as an example five sets of multidimensional resource allocation information of the opponent DU' for preceding points in time t-1, t-2, ....

Block arrow BA1 of Fig. 6 symbolizes a dimensionality reduction as may, e.g., be obtained by the flattening explained above, see, for example, blocks 210, 210a of Fig. 4 and a compression of the so obtained one-dimensional input information I-1D by means of the encoder 22 (Fig. 2). This way, in some examples, a plurality of - presently for example five - compressed radio resource grid (e.g., "CRRG") sets c1, c2, ... are obtained, each CRRG set c1, c2, ... being associated with a respective point in time t-1, t-2, .... In other words, the CRRG sets c1, c2, ... correspond to a respective latent space representation of the flattened information I-RAI-MD, as obtained by the encoder 22.

Block arrow BA2 of Fig. 6 symbolizes a multivariate time series forecasting as e.g. enabled by the second model 30 (Fig. 2), based on the CRRG sets c1, c2, ..., wherein a predicted CRRG set d1 (e.g., at least similar to output I-RAI-1D-PRED of block 204, 204a of Fig. 3) is obtained.

Block arrow BA3 of Fig. 6 symbolizes a decompression of the set d1 using the decoder 24 of the first model 20 and a reconstruction of the decompressed information into a two-dimensional predicted resource allocation information I-RAI-MD-PRED, e.g., reverting the flattening 210, 210a explained above. Thus, the information I-RAI-MD-PRED of Fig. 6 represents a forecast of a radio resource allocation pattern of the opponent DU 10', as may, e.g., be determined by the DU 10 (Fig. 2) based on the information I-RAI-MD and the models 20, 30.

Fig. 7 schematically depicts a topology of a deep autoencoder 20 according to some examples. The deep autoencoder 20 comprises an encoder 22 having a plurality of layers, each layer comprising processing elements, e.g., artificial neurons, as known by the skilled person. An input layer 22a of the encoder 22 is configured to receive input data to be processed by the deep autoencoder, e.g., in the form of the one-dimensional input information I-1D. An output layer 22b of the encoder 22 provides a latent space representation 23 of at least a portion of the one-dimensional input information I-1D, which may be provided to a decoder 24 of the deep autoencoder, e.g., for reconstructing information based on the latent space representation 23. Note that Fig. 7 schematically depicts a basic functionality of an example deep autoencoder, wherein the output 23 of the encoder 22 is provided to the decoder 24. However, in some example embodiments, the output of the encoder 22 is not directly provided to the decoder 24, but rather an output of the second model 30 may be provided to the decoder 24 for reconstruction, see, for example, Fig. 9 explained further below, which enables to reconstruct predicted data as obtained by the second model 30 using the decoder 24.

Fig. 8 schematically depicts aspects of a multivariate time-series prediction using the second model 30. Element E1 symbolizes input data in the form of a plurality of multivariate time-series. As an example, each row of the input data E1 may, e.g., represent input information associated with a specific point in time. The second model 30 receives the input data E1 and determines, based on the input data E1, predicted information E2. In some examples, Fig. 8, each row of element E1 may, e.g., represent one set of the CRRG sets c1, c2, ... of Fig. 6, and element E2 of Fig. 8 may, e.g., correspond with the predicted data set d1 of Fig. 6. As mentioned above, the predicted data d1, E2 as obtained by the second model 30 may be provided to the decoder 24 for further processing, e.g. reconstruction.

Fig. 9 schematically depicts aspects of the first model 20 and the second model 30 jointly processing data according to some examples. Element E10 symbolizes historic multi-dimensional resource allocation information I-RAI-MD, also see Fig. 2, 3, which, after flattening (also see blocks 210, 210a of Fig. 4), may be compressed by the encoder 22 of the deep autoencoder 20 to obtain a condensed one-dimensional representation E11 (also see element I-RAI-1D of Fig. 2, 3) of the historic multi-dimensional resource allocation information E10, I-RAI-MD. In some examples. this process related to elements E10, E11, 22 may be performed for several sets of historic multi-dimensional resource allocation information, e.g., associated with different respective points in time t-1, t-2, ..., t-n, wherein a respective set E12 of the condensed one-dimensional representations of the historic multi-dimensional resource allocation information E10 is obtained. In some examples, this set E12 is provided as input data to the second model 30, for determining predicted condensed information E13 associated with a (e.g., future or current) point in time t, e.g., at least similar to the predicted condensed one-dimensional resource allocation information I-RAI-1D-PRED of Fig. 2, 3. The decoder 24 (Fig. 9) of the first model 20 is configured to expand the predicted condensed information E13 to obtain the predicted multi-dimensional resource allocation information E14, I-RAI-MD-PRED based thereon, e.g., by decoding and, optionally, by reverting the flattening on the encoder side.

From Fig. 9, it can be seen that the decoder 24 of the first model 20, e.g., the deep autoencoder, does not decode the condensed information E11 as obtained by the encoder 22, but rather the decoder 24 receives the output E13 of the second model 30 for decoding, thus enabling to reconstruct the predicted multi-dimensional resource allocation information E14, I-RAI-MD-PRED based on the prediction by means of the second model 30. In other words, in some examples, the encoder 22 and the decoder 24 of the autoencoder, e.g., the first model 20, may be considered to be "interlaced" with the processing by means of the second model 30.

In some examples, a resource allocation grid to be predicted may be represented as a 2-D matrix (i.e., comprising time and frequency dimensions), and AI/ML-based time-series forecasting algorithms may be implemented, e.g., by the second model 30, to perform the prediction. As a time-series prediction of, e.g., an entire resource grid may become an extremely high-dimensional problem, in some examples, it is proposed to first compress, e.g., the entire sparse 2-D matrix (e.g., resource grid), e.g., representing the information I-RAI-MD (Fig. 6), e.g., to a comparatively small, dense 1-D vector, see the information I-RAI-1D of Fig. 6. In some examples, several such vectors c1, c2, ... may be provided, e.g., for several past resource allocation and/or coordination periods, and in some examples, these vectors c1, c2, ... may be utilized, e.g., to learn and/or to apply time-series prediction, e.g., using the second model 30. In other words, in some examples, instead of a single variable to be forecasted there is a vector d1 to be predicted, e.g., as a time-series, which can be done by using the second model 30.

In some examples, one or more of the following aspects are proposed: a) Condense snapshots of historical 2-D resource grids I-RAI-MD of the opponent DU 10' (Fig. 2), e.g., into comparatively small, dense 1-D vectors c1, c2, ..., e.g., using the encoder 22 of the first model 20, e.g., to reduce a dimensionality of the high-dimensional resource grid information I-RAI-MD. b) Apply multivariate time-series prediction, e.g., using the second model 30, e.g., to predict the condensed vector d1 (e.g., representing the opponent DU's 10' resource grid for the current allocation period t), e.g., by learning their allocation pattern and load from historical information I-RAI-MD as may, in some examples, be captured in the condensed 1-D vectors c1, c2, .... c) Decompress the predicted 1-D vector d1 using the decoder 24 of the first model 20, e.g., to reconstruct the resource allocation prediction I-rai-MD-PRED of the opponent DU 10' for the current allocation period t.

In the following, example aspects of a deep autoencoder (DAE) for Resource Grid Compression and Reconstruction according to the principle of the disclosure are provided.

In some examples, the DAE model 20 learns the following function: $h\left(r_t; \theta\right) \approx r_t$ where $r_t = (r_{t11}, ..., r_{tmn})$ represents a flattened vector (see, for example, information I-1D of Fig. 4) for the 2-D resource grid, e.g., with n slots and $m$ physical resource blocks ("PRBs"). In some examples, $\theta$ denotes a set of model parameters $\{W^1, ..., W^{L-1}, b^1, ..., b^{L-1}\}$ of the first model 20, where $W^{L-1}$ and $b^{L-1}$ refers to the weights and biases between the layers L-1 and L-2 of an autoencoder for which the layers can be represented by $l \in \{0, ..., L - 1\}$.

In some examples, e.g., while training (also see blocks 220, 222 of Fig. 5), the first model 20 takes as input a flattened vector for a snapshot of a resource grid. Then it tries to reconstruct the input in the output by updating its model parameters $\theta$. Once the training is complete, for any flattened vector $r_t$, a smaller k-dimensional Condensed Radio Resource Grid (CRRG) vector is generated in the bottleneck layer 23 (Fig. 7). This way, in some examples, the size of the 2-D resource grid may be reduced to a comparatively dense 1-D vector c1, c2, ... (Fig. 6) at the encoder output. In some examples, the trained decoder 24 may later be used for reconstruction of forecasted CRRG vectors d1 (Fig. 6). In some examples, the accuracy of the DAE model 20 used for, inter alia, the compression, is critical. In some examples, the more is the accuracy of this first model 20, the better the forecasts d1 may be for the opponent DU's 10' resource request, e.g., because errors may propagate to the time series prediction as provided by the second model 30.

In the following, example aspects of multivariate time series prediction for predicting the compressed resource grid vectors according to some examples are provided.

As explained above, for example with respect to Fig. 6, 8, 9, several historical CRRG vectors ((t-n) to (t-1)), see element E12 of Fig. 9, may be used by the second model 30 to predict a next CRRG vector E13. In some examples, the CRRG vector(s) contain multiple elements (i.e., more than one variable to be predicted), and instead of using a separate time-series prediction model for each of the elements in the vector(s) E12, in some examples, the second model, e.g., for multivariate time-series prediction, is employed, that can also capture correlations between the time-series of the multiple elements (or features) condensed in the CRRG vector(s) E12.

In some examples, multivariate time-series forecasting algorithms based on autoregression algorithms or Long Short-Term Memory (LSTM) based algorithms may be applied, e.g., using the second model 30. In some examples, there are at least two options for the multivariate time-series forecasting. One option is to use a ML-based technique, called Vector Autoregression (VAR), and another option is to use an encoder-decoder LSTM network.

In some examples, e.g., to forecast a k-dimensional CRRG vector (see, e.g., element E13 of Fig. 9) using p historical observations, a k-dimensional VAR model 30 of order p may be considered, where there are k time series variables influencing each other. In some examples, the VAR model 30 may be modelled as a system of equations with one equation per time series variable. In some examples, the second model may, e.g., be represented in matrix notation as follows:

$$\begin{bmatrix} y_1 \\ y_2 \\ \vdots \\ y_k \end{bmatrix} = \begin{bmatrix} c_1 \\ c_2 \\ \vdots \\ c_k \end{bmatrix} + \begin{bmatrix} \varphi_{11} \cdot \cdot \\ \varphi_{21} \cdot \cdot \\ \vdots \\ \varphi_{k1} \cdot \cdot \end{bmatrix} \begin{bmatrix} y_{1,t-1} \\ y_{2,t-1} \\ \vdots \\ y_{k,t-1} \end{bmatrix} + \cdots + \begin{bmatrix} \varphi_{11} \cdot \cdot \\ \varphi_{21} \cdot \cdot \\ \vdots \\ \varphi_{k1} \cdot \cdot \end{bmatrix} \begin{bmatrix} y_{1,t-p} \\ y_{2,t-p} \\ \vdots \\ y_{k,t-p} \end{bmatrix} + \begin{bmatrix} \epsilon_1 \\ \epsilon_2 \\ \vdots \\ \epsilon_k \end{bmatrix}$$

In some examples, e.g., alternatively to a VAR model, one of the deep learning architectures using LSTM units, known, e.g., as Encoder-Decoder LSTM, is proposed for the aspect of CRRG prediction according to some examples. In some examples, the Encoder-Decoder LSTM architecture may be comprised of two models: one for reading an input sequence and encoding it into a fixed-length vector, and a second one for decoding the fixed-length vector and outputting the predicted sequence. The use of the models in conjunction gives the architecture its name of Encoder-Decoder LSTM. In the heart of this Encoder-Decoder LSTM model, the input sequences may, e.g., be embedded to a fixed size internal representation (e.g., "context vector") that may, e.g., be used to generate or predict output sequences.

In this regard, Fig. 10 schematically depicts aspects of an LSTM unit E20 that may be used for implementing the Encoder-Decoder LSTM model according to some examples. Element E21 symbolizes a forget gate configured to forget irrelevant information, element E22 symbolizes a new memory gate configured to add and/or update (new) information, end element E23 symbolizes an output gate configured to forward updated information. Element E24 symbolizes an output of a preceding LSTM unit (not shown). Element E25 symbolizes a memory of the preceding LSTM unit. Element E26 symbolizes an output of the current LSTM unit E20. Element E27 symbolizes a memory of the current LSTM unit E20. In some examples, a plurality of LSTM units E20 as depicted by Fig. 10 may be provided in a manner per se known by the skilled person, e.g., to form the Encoder-Decoder LSTM model according to some examples, e.g., for implementing the second model 30.

In some examples, e.g., during a training, the encoder inputs of the Encoder-Decoder LSTM model may be prepared as p (e.g., number of time steps considered) CRRG vectors (see, for example, element E12 of Fig. 19) of length k. As discussed earlier, in some examples, the encoder of the Encoder-Decoder LSTM model may be created with LSTM units (see, for example, Element E20 of Fig. 10) or bidirectional LSTM units, and after the encoder, a repeat vector may be used, e.g., for one output time step, e.g., before feeding into the decoder network. In some examples, the decoder network of the Encoder-Decoder LSTM model may again be created using a LSTM or Bidirectional LSTM network. In some examples, the decoder output may, e.g., be passed through a time-distributed layer, e.g., to predict all the k elements of the predicted CRRG vector.

In some other examples, e.g., apart from the above-mentioned examples for multivariate time-series forecasting algorithms, e.g., to implement the second model 30, Transformer-based models may also be used. In this case, historical requests can, e.g., be serialized, e.g., into a flat sequence of tokens, and with the help of an appropriate embedding function, the flat sequence of tokens can be translated, e.g., to a lower-dimensional vector space. In some examples, an output of the embedding function can then be fed to a sequential model like a transformer network, e.g., to predict a next token. In some examples, this approach may also be used to realize the functionality of the second model 30, e.g., for forecasting a resource request of the opponent DU 10' (Fig. 2).

In some examples, e.g., once an initial version of the models 20, 30 (Fig. 2) is trained (Fig. 5) and, e.g., deployed in the communication system 1 (Fig. 2), the models 20, 30 may, e.g., be retrained (see block 222 of Fig. 5), e.g., repeatedly, e.g., at some periodic intervals, e.g., to continuously keep capturing updates in the dynamics related to a load/traffic pattern as reflected by the historic resource allocation information.

In some examples, while the retraining 222 of at least one of the models 20, 30 takes place, a respective previous version of the model(s) 20, 30 may be used in deployment. In some examples, when the retraining 222 is completed, the models (e.g., the previous model) may be updated with the latest (retrained) model(s).

In some examples, Fig. 2, e.g., in a MV-MRSS configuration, the target DU 10 may send its resource coordination request to the opponent DU 10' and may, e.g., in turn, receive its resource allocation in the resource coordination response from the opponent DU 10'. In some examples, e.g., to extract a resource request of the opponent DU 10' from the resource coordination response received from the opponent DU 10', the target DU 10 may, e.g., apply a corresponding resource allocation algorithm in a reverse manner, e.g., using the resulting resource allocation and its resource request. In some examples, this reconstructed resource request of the opponent DU 10' may be used as input for the prediction according to the principle of the disclosure, e.g. as the historic multi-dimensional resource allocation information I-RAI-MD.

In some examples, Fig. 2, the opponent DU 10' may send its own resource request to the target DU 10, and the target DU 10 may, e.g., perform aspects of blocks 202, 204, 204 (Fig. 3), e.g., based on the so received resource request of the opponent DU 10'. Thereby, in some examples, the target DU 10 may, e.g., save a reverse application of the resource allocation algorithm to reconstruct the opponent DU's data.

In some examples, the principle according to the disclosure may, e.g., be applied to aspects of radio unit, RU, sharing as, e.g., discussed in Open Radio Access Network, O-RAN. As an example, a radio unit may, e.g., send a resource grid corresponding to IQ data of a primary operator to a secondary operator. In some examples, the information exchanged may, e.g., comprise the resources (e.g., PRBs) used by the primary operator, e.g., per slot. Using the principle according to the embodiments, the secondary operator can, e.g., create a prediction of the resource request of the primary operator, and it can transmit IQ data or request IQ data to be received on resources which are not conflicting with the primary operator or have a low probability of conflict. In some examples, this may, e.g., increase a throughput of the secondary operator and of the overall system.

In some examples, the proposed principle according to the disclosure may, e.g., be used in a dynamic spectrum access (DSA) scheme, e.g., to predict a channel usage of an incumbent radio technology and, e.g., to transmit/receive when no transmission of the incumbent radio technology is expected.

Some examples, Fig. 11, relate to a computer program PRG comprising instructions INSTR which, when executed by an apparatus 100, 100', cause the apparatus 100, 100' to perform the method according to the disclosure.

Some examples, Fig. 11, relate to a computer-readable storage medium SM, for example a non-transitory computer-readable storage medium SM, comprising the computer program PRG according to the disclosure.

Some examples, Fig. 11, relate to a data carrier signal DCS carrying and/or characterizing the computer program PRG according to the disclosure.

**Claims**

1. An apparatus (100') for a wireless communication system (1), the apparatus (100) comprising means (102') for determining (202), based on historic multi-dimensional resource allocation information (I-RAI-MD) of a network device (10; 10') for the wireless communication system (1), a condensed one-dimensional representation (I-RAI-1D) of the historic multi-dimensional resource allocation information (I-RAI-MD) using a first model (20), determining (204) predicted condensed one-dimensional resource allocation information (I-RAI-1D-PRED) based on the condensed one-dimensional representation (I-RAI-1D) of the historic multi-dimensional resource allocation information (I-RAI-MD) using a second model (30), which is different from the first model (20), expanding (206) the predicted condensed one-dimensional resource allocation information (I-RAI-1D-PRED) using the first model (20) to obtain predicted multi-dimensional resource allocation information (I-RAI-MD-PRED) for the network device (10; 10').

2. The apparatus (100) according to claim 1, wherein the first model (20) is an autoencoder, wherein determining (202) the condensed one-dimensional representation (I-RAI-1D) of the historic multi-dimensional resource allocation information (I-RAI-MD) comprises encoding (202a) the historic multi-dimensional resource allocation information

(I-RAI-MD) using an encoder (22) of the autoencoder (20), wherein expanding (206) the predicted condensed one-dimensional resource allocation information (I-RAI-1D-PRED) comprises decoding (206a) the predicted condensed one-dimensional resource allocation information (I-RAI-1D-PRED) using a decoder (24) of the autoencoder (20).

3. The apparatus (100) according to any of the preceding claims, wherein the second model (30) is configured to perform a multivariate time-series prediction (204a) based on the condensed one-dimensional representation (I-RAI-1D) of the historic multi-dimensional resource allocation information (I-RAI-MD) to obtain the predicted condensed one-dimensional resource allocation information (I-RAI-1D-PRED) .

4. The apparatus (100) according to any of the preceding claims, wherein the second model (30) comprises at least one of: a) a model for Vector Autoregression, VAR, or b) an Encoder-Decoder LSTM, long short-term memory, model, or c) a Transformer based model.

5. The apparatus (100) according to any of the preceding claims, wherein the historic multi-dimensional resource allocation information (I-RAI-MD) comprises historic time-frequency resource allocation information.

6. The apparatus (100) according to any of the preceding claims, further comprising means (102') for flattening (210) the historic multi-dimensional resource allocation information (I-RAI-MD) to obtain one-dimensional input information (I-1D) for the first model (20), providing (212) the one-dimensional input information (I-1D) to an input layer (22a) of the encoder (22), wherein flattening (210) the historic multi-dimensional resource allocation information (I-RAI-MD) comprises concatenating (210a) one of rows or columns of the historic multi-dimensional resource allocation information (I-RAI-MD).

7. The apparatus (100) according to any of the preceding claims, further comprising means (102') for training (220) at least one of the first model (20) or the second model (30), optionally retraining (222) at least one of the first model (20) or the second model (30), and using (224) the first model (20) and the second model (30) to predict a future resource allocation (RA-FUT) for the network device (10).

8. A method for a wireless communication system (1), comprising: determining (202), based on historic multi-dimensional resource allocation information (I-RAI-MD) of a network device (10; 10') for the wireless communication system (1), a condensed one-dimensional representation (I-RAI-1D) of the historic multi-dimensional resource allocation information (I-RAI-MD) using a first model (20), determining (204) predicted condensed one-dimensional resource allocation information (I-RAI-1D-PRED) based on the condensed one-dimensional representation (I-RAI-1D) of the historic multi-dimensional resource allocation information (I-RAI-MD) using a second model (30), which is different from the first model (20), expanding (206) the predicted condensed one-dimensional resource allocation information (I-RAI-1D-PRED) using the first model (20) to obtain predicted multi-dimensional resource allocation information (I-RAI-MD-PRED) for the network device (10; 10').

9. A network device (10; 10') for a wireless communication system (1), comprising at least one apparatus (100; 100') according to any of the claims 1 to 7.

10. The network device (10; 10') according to claim 9, wherein the network device (10; 10') is a distributed unit.

11. The network device (10; 10') according to claim 10, wherein the distributed unit (10) is configured to predict at least one future resource allocation request of a further distributed unit (10').

12. A wireless communication system (1) comprising at least one apparatus (100; 100') according to any of the claims 1 to 7.

13. A computer program (PRG) comprising instructions (INSTR) which, when executed by an apparatus (100; 100'), cause the apparatus (100; 100') to perform the method according to claim 8.

14. A computer-readable storage medium (SM), for example a non-transitory computer-readable storage medium, comprising the computer program (PRG) according to claim 13.

15. A data carrier signal (DCS) carrying and/or characterizing the computer program (PRG) according to claim 13.

**Fig. 1A**

**Fig. 1B**

100

102

104

106

100'

102'

104'

**Fig. 2**

1

10

100,
100'

20

22    24

30

I-RAI-MD

I-RAI-1D

I-RAI-1D-PRED

I-RAI-MD-PRED

10'

100,
100'

## Fig. 3

200 — PROVIDE HISTORIC MULTI-DIMENSIONAL RESOURCE ALLOCATION INFORMATION OF NETWORK DEVICE FOR WIRELESS COMMUNICATION SYSTEM

I-RAI-MD

202, 202a — DETERMINE, BASED ON HISTORIC MULTI-DIMENSIONAL RESOURCE ALLOCATION INFORMATION OF NETWORK DEVICE, CONDENSED ONE-DIMENSIONAL REPRESENTATION OF HISTORIC MULTI-DIMENSIONAL RESOURCE ALLOCATION INFORMATION USING FIRST MODEL

I-RAI-1D

204, 204a — DETERMINE PREDICTED CONDENSED ONE-DIMENSIONAL RESOURCE ALLOCATION INFORMATION BASED ON CONDENSED ONE-DIMENSIONAL REPRESENTATION USING SECOND MODEL DIFFERENT FROM FIRST MODEL

I-RAI-1D-PRED

206, 206a — EXPAND PREDICTED CONDENSED ONE-DIMENSIONAL RESOURCE ALLOCATION INFORMATION USING FIRST MODEL TO OBTAIN PREDICTED MULTI-DIMENSIONAL RESOURCE ALLOCATION INFORMATION FOR NETWORK DEVICE

I-RAI-MD-PRED

## Fig. 4

210, 210a — FLATTEN HISTORIC MULTI-DIMENSIONAL RESOURCE ALLOCATION INFORMATION TO OBTAIN ONE-DIMENSIONAL INPUT INFORMATION FOR FIRST MODEL

I-1D

212 — PROVIDE ONE-DIMENSIONAL INPUT INFORMATION TO INPUT LAYER OF ENCODER

I-1D

## Fig. 5

220 — TRAIN AT LEAST ONE OF FIRST MODEL OR SECOND MODEL

20, 30

222 — RETRAIN AT LEAST ONE OF FIRST MODEL OR SECOND MODEL

20, 30

224 — USE FIRST MODEL AND SECOND MODEL TO PREDICT FUTURE RESOURCE ALLOCATION FOR NETWORK DEVICE

20, 30, RA-FUT

226 — PERFORM RESOURCE REQUEST BASED ON FUTURE RESOURCE ALLOCATION FOR NETWORK DEVICE

**Fig. 6**

**Fig. 7**

**Fig. 8**

**Fig. 9**

**Fig. 10**

E20

E24

E25

E21  E22  E23

E26

E27

**Fig. 11**

SM

PRG

INSTR

DCS

PRG

**EUROPEAN SEARCH REPORT**

Application Number

EP 25 20 9125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI DONGLIANG ET AL: "Lotnet: A Low Overhead Approach for Cellular Traffic Prediction of Large-Scale Urban Area", 2023 8TH IEEE INTERNATIONAL CONFERENCE ON NETWORK INTELLIGENCE AND DIGITAL CONTENT (IC-NIDC) IEEE, 3 November 2023 (2023-11-03), pages 325-330, XP034521612, DOI: 10.1109/IC-NIDC59918.2023.10390575 [retrieved on 2024-01-23] * abstract; figures 2, 3 * * Sections 2.1, 3 (complete), 4.1, 4.2 * | 1-15 | INV.<br>G06N3/0442<br>G06N3/0455<br>G06N3/08<br>H04L47/70<br>H04L47/83<br>H04W72/04 |
| X | US 2022/138537 A1 (QUANZ BRIAN LEO [US] ET AL) 5 May 2022 (2022-05-05) * abstract; figures 1, 2, 6 * * paragraphs [0007] - [0018], [0042] - [0046], [0056] - [0061] * | 1-15 | |
| | | | **TECHNICAL FIELDS SEARCHED (IPC)** |
| | | | G06N<br>H04L<br>H04W |

The present search report has been drawn up for all claims

| Place of search | Date of completion of the search | Examiner |
|---|---|---|
| The Hague | 24 March 2026 | Houtgast, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 745 839 A1**

## ANNEX TO THE EUROPEAN SEARCH REPORT
## ON EUROPEAN PATENT APPLICATION NO.

EP 25 20 9125

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | Publication date | Patent family member(s) | Publication date |
|---|---|---|---|
| US 2022138537 A1 | 05-05-2022 | CN 114444684 A | 06-05-2022 |
| | | JP 7751936 B2 | 09-10-2025 |
| | | JP 2022074133 A | 17-05-2022 |
| | | US 2022138537 A1 | 05-05-2022 |

EPO FORM P0459

For more details about this annex : see Official Journal of the European Patent Office, No. 12/82